# EUROPÄISCHE PATENTANMELDUNG

(11) **EP 2 501 010 A1**
(43) Veröffentlichungstag der Anmeldung: **19.09.2012**
(21) Anmeldenummer: 11158549.3
(22) Anmeldetag: 16.03.2011
(51) Int. Cl.: H02J 1/10, G06F 1/26

(54) **Verfahren zum Betreiben eines modularen elektrischen Systems**

(71) Anmelder: Siemens Aktiengesellschaft, 80333 München (DE)
(72) Erfinder: Klamm, Arnold, 76870 Kandel (DE); Metzler, Matthias, 76229 Karlsruhe (DE); Abert, Michael, 76474 Au (DE); Engl, Werner, 92706 Luhe-Wildenau (DE); Griessbach, Gunter, 09423 Gelenau (DE); Schmidt, Dirk, 08321 Zschorlau/OT Albernau (DE)

(57) **Zusammenfassung**

Die Erfindung betrifft ein Verfahren zum Betreiben eines modularen elektrischen Systems, welches eine Vielzahl von Quellen- und Senkenmodulen aufweist, wobei mindestens zwei Quellenmodule zur Versorgung der Senkenmodule mit elektrischer Leistung vorgesehen und für einen stromversorgungsredundanten Betrieb und/oder zur Erhöhung der verfügbaren Leistung parallel geschaltet sind, wobei einer Auswerteeinheit von dem jeweiligen Quellenmodul der Zustand dieses Quellenmoduls angezeigt wird. Es werden Maßnahmen vorgeschlagen, mittels deren der Betrieb im Hinblick auf eine flexiblere Stromversorgungsredundanz bezüglich der Redundanzart, beispielsweise eine 1-aus-2- oder eine 2-aus-3-Stromversorgungsredundanz, bzw. im Hinblick auf die Verfügbarkeit der Energieversorgung verwirklicht werden kann.

## Beschreibung

Die Erfindung betrifft ein Verfahren zum Betreiben eines modularen elektrischen Systems, welches eine Vielzahl von Quellen- und Senkenmodulen aufweist, wobei mindestens zwei Quellenmodule zur Versorgung der Senkenmodule mit elektrischer Leistung vorgesehen und für einen stromversorgungsredundanten Betrieb und/oder zur Erhöhung der verfügbaren Leistung parallel geschaltet sind, wobei einer Auswerteeinheit von dem jeweiligen Quellenmodul der Zustand dieses Quellenmoduls angezeigt wird. Ferner betrifft die Erfindung ein modulares elektrisches System, welches zur Durchführung des Verfahrens geeignet ist, und darüber hinaus eine Auswerteeinheit für ein derartiges System.

Ein derartiges Verfahren sowie ein derartiges System in Form eines modularen Automatisierungssystems ist aus dem Nachschlagewerk "SIMATIC, S7-400, Automatisierungssystem S7-400, Baugruppendaten", Ausgabe 09/2009 bekannt. Mittels zwei so genannten redundierbaren Stromversorgungsbaugruppen, die jeweils dazu ausgebildet sind, die Versorgung aller Baugruppen eines Baugruppenträgers mit elektrischer Leistung zu übernehmen, kann eine redundante Stromversorgung bzw. Stromversorgungsredundanz verwirklicht werden. Für den Fall eines Redundanzverlustes, d. h. für den Fall, dass eine der beiden parallel geschalteten Stromversorgungsbaugruppen ausfällt, was diese Stromversorgungsbaugruppe einer CPU-Baugruppe oder einer sonstigen intelligenten Baugruppe des Baugruppenträgers über eine geeignete Signalleitung anzeigt, versorgt die andere allein die Baugruppen mit elektrischer Leistung, wodurch eine Betriebsunterbrechung verhindert wird.

Nachteilig ist, dass zur Verwirklichung der Stromversorgungsredundanz diese speziell ausgestalteten redundierbaren Stromversorgungsbaugruppen eingesetzt werden müssen und dass im Rahmen der Projektierung des Automatisierungssystems mittels eines Engineering-Systems diese Stromversorgungsredundanz explizit projektiert werden muss; denn ohne diese speziell ausgestalteten Stromversorgungsbaugruppen und ohne eine derartige Projektierung würde die Anzeige einer Funktionsstörung bzw. eines Ausfalls einer der redundierbaren Stromversorgungsbaugruppen ein Herunterfahren des Automatisierungssystems bewirken. Ferner ist nachteilig, dass mit derartigen Stromversorgungsbaugruppen die Redundanzart beschränkt ist, d. h., es kann lediglich eine 1-aus-2-Redundanz verwirklicht werden. Andere Redundanzarten, z. B. eine 2-aus-3-Redundanz, können nicht bewerkstelligt werden.

Aus der EP 2 149 956 A1 ist bekannt, Stromversorgungsmodule in Form von Quellenmodulen und weitere Module in Form von Senkenmodulen mit Kennzeichnungsmitteln zu versehen, die im Hinblick auf die Quellenmodule deren jeweilige Leistungskapazität bzw. Leistungsabgabe und im Hinblick auf die Senkenmodule deren jeweiligen Leistungsbedarf repräsentieren. Aufgrund dieser Kennzeichnungsmittel ist eine Leistungsbilanzierung sowohl auf Leistung bzw. Strom abgebende als auch auf Leistung bzw. Strom aufnehmende Module bzw. Baugruppen möglich. Maßnahmen im Hinblick auf eine Stromversorgungsredundanz sind nicht vorgesehen.

Der Erfindung liegt die Aufgabe zugrunde, ein Verfahren der eingangs genannten Art anzugeben, mittels welchem der Betrieb im Hinblick auf eine flexiblere Stromversorgungsredundanz bezüglich der Redundanzart bzw. im Hinblick auf die Verfügbarkeit der Energieversorgung vereinfacht wird. Darüber hinaus sind ein modulares elektrisches System zu schaffen, welches zur Durchführung eines derartigen Verfahrens geeignet ist, sowie eine Auswerteeinheit für ein modulares elektrisches System.

Diese Aufgabe wird im Hinblick auf das Verfahren durch die im kennzeichnenden Teil des Anspruchs 1 angegebenen, bezüglich des modularen elektrischen Systems durch die im kennzeichnenden Teil des Anspruchs 5 und in Bezug auf die Auswerteeinheit durch die im kennzeichnenden Teil des Anspruchs 10 angegebenen Maßnahmen gelöst.

Vorteilhaft ist, dass das modulare System selbstständig erkennen kann, ob aufgrund seines aktuellen Aufbaus ein redundanter Betrieb im Hinblick auf die Stromversorgung möglich ist und/oder ob die Gesamt-Leistungsabgabe dem Gesamt-Leistungsbedarf entspricht oder die Gesamt-Leistungsabgabe den Gesamt-Leistungsbedarf unter- oder überschreitet. Ferner können auch Stromversorgungsmodule (Quellenmodule), deren Leistungsabgaben unterschiedlich sein können und welche nicht speziell für einen redundanten Einsatz ausgestaltet sind, eingesetzt werden, um eine Stromversorgungsredundanz zu verwirklichen. Darüber hinaus werden neben einer 1-aus-2-Redundanz weitere Redundanzarten, z. B. eine 2-aus-3-Redundanz, unterstützt.

Die Erfindung geht von der Idee aus, die in einem modularen System bereitgestellte Leistung von Quellen- bzw. Stromversorgungsmodulen mit der im System benötigten Leistung für Senkenmodule (Verbraucher) abzugleichen, um daraus Schlüsse im Hinblick auf eine Stromversorgungsredundanz und/oder bezüglich der verfügbaren Leistung ziehen zu können. Beispielsweise wird als Kriterium für eine Stromversorgungsredundanz geprüft, ob für den Fall, dass ein Stromversorgungsmodul aus dem modularen System entfernt wird, oder für den Fall, dass dieses Modul ausfällt, das modulare System im Hinblick auf die Leistungsabgaben der restlichen Stromversorgungsmodule auch ohne die von diesem Stromversorgungsmodul vor dem Ausfall bzw. vor dem Entfernen aus dem System bereitgestellte Leistung auskommt oder auskommen würde, um die Senkenmodule noch ausreichend mit elektrischer Leistung zu versorgen. Mit anderen Worten: es wird daher geprüft, ob die noch verbleibende bereitgestellte Leistung mindestens der Summe aller "nachgefragten" Leistung der Senkenmodule entspricht oder entsprechen würde.

In einer Ausgestaltung der Erfindung ist vorgesehen, dass einem Anwender angezeigt wird, ob das modulare System im redundanten Betrieb - Stromversorgungsredundanz - oder im nicht-redundanten Betrieb betreibbar ist und/oder ob die Gesamt-Leistungsabgabe dem Gesamt-Leistungsbedarf entspricht oder die Gesamt-Leistungsabgabe den Gesamt-Leistungsbedarf unter- oder überschreitet. Aufgrund dieses Hinweises bzw. dieser Hinweise kann der Anwender Maßnahmen einleiten, um z. B. durch Austausch eines defekten Quellenmoduls eine gewünschte Stromversorgungsredundanz sicherzustellen oder um ein weniger leistungsfähiges Quellenmodul durch ein Quellenmodul auszutauschen, welches sich durch eine höhere Leistungsabgabe auszeichnet.

In einer weiteren Ausgestaltung der Erfindung wird die Prüfung redundant ausgeführt, wodurch die Zuverlässigkeit dieser Prüfung erhöht wird. Beispielsweise wird die Prüfung sowohl in einer Auswerteeinheit eines Quellenmoduls als auch in einer Auswerteeinheit eines Senkenmoduls ausgeführt, wobei in diesem Fall der jeweiligen Auswerteeinheit der Module zur Ermittlung des Gesamt-Leistungsbedarfs und der Gesamt-Leistungsabgabe die in den Senkenmodulen hinterlegten Informationen über den Leistungsbedarf des jeweiligen Senkenmoduls und die in den Quellenmodulen hinterlegten Informationen über die Leistungsabgabe des jeweiligen Quellenmoduls übermittelt werden.

Weitere vorteilhafte Ausgestaltungen der Erfindung ergeben sich aus den weiteren Unteransprüchen.

Anhand der Zeichnung, in der Ausführungsbeispiele der Erfindung veranschaulicht sind, werden im Folgenden die Erfindung, deren Ausgestaltungen sowie Vorteile näher erläutert.

Es zeigen in vereinfachter Darstellung:
- Figuren 1 bis 6: Bestandteile eines Automatisierungsgerätes und
- Figur 7: eine Auswerteeinheit.

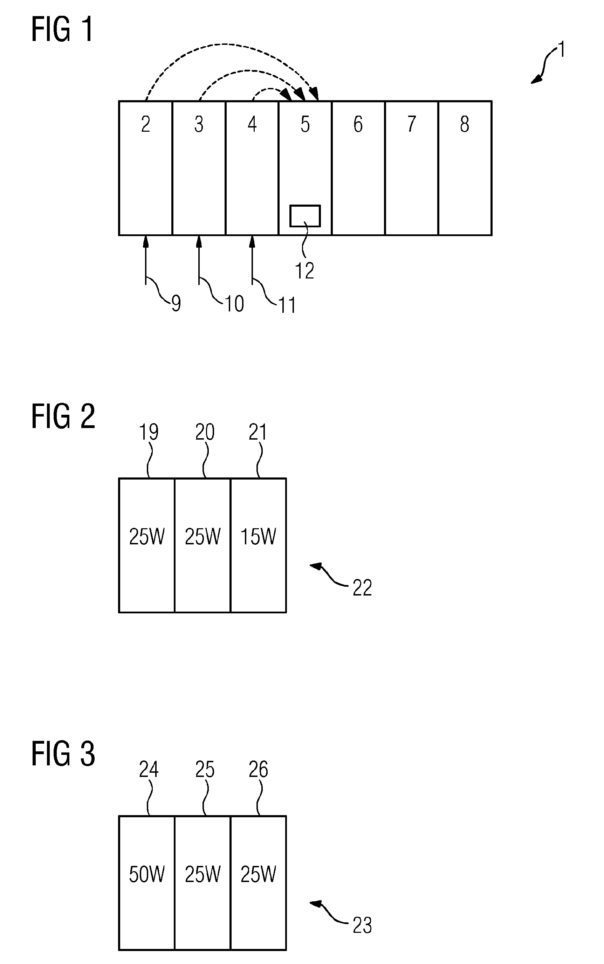

In Figur 1 ist mit 1 ein Automatisierungsgerät bezeichnet, das drei parallel geschaltete Quellenmodule in Form von drei Stromversorgungsbaugruppen 2, 3, 4 und mehrere Senkenmodule in Form einer CPU-Baugruppe 5, einer Kommunikationsbaugruppe 6 sowie von Ein-/Ausgabebaugruppen 7, 8 umfasst, wobei die Baugruppen 2 bis 8 über Versorgungsleitungen miteinander verbunden sind. Weitere zur Steuerung einer technischen Anlage erforderliche Automatisierungskomponenten, z. B. geeignete Softwarekomponenten, Reglerbaugruppen oder an die Ein-/Ausgabebaugruppen 7, 8 angeschlossene Sensoren, Aktoren, sind für die Erfindung ohne Bedeutung und es wird daher auf diese Komponenten nicht näher eingegangen. Das Automatisierungsgerät 1 weist ferner einen Rückwandbus auf, an welchen die Baugruppen 2 bis 8 angeschlossen sind und über welchen die Baugruppen 2 bis 8 Informationen austauschen. Über diesen Rückwandbus oder über eine weitere geeignete Kommunikationsverbindung übermitteln die Stromversorgungsbaugruppen 2, 3, 4, welche mit Eingangsspannungen 9, 10, 11 beaufschlagt sind, einer Auswerteeinheit 12 der CPU-Baugruppe 5 ihren jeweiligen Zustand bzw. einen jeweiligen Zustandswechsel, was in der Figur 1 durch gestrichelte Linien angedeutet ist. Beispielsweise meldet die Stromversorgungsbaugruppe 2 der Auswerteeinheit 12 den Ausfall der Spannungs- und Stromversorgung, falls die Stromversorgungsbaugruppe 2 die Baugruppen 5 bis 8 nicht mehr mit einer geeigneten Spannung und mit einem geeigneten Strom versorgen kann. Eine mögliche Ursache dafür ist z. B. der Ausfall der Eingangsspannung 9, aus welcher die Stromversorgungsbaugruppe 2 für den Betrieb der Baugruppen 5 bis 8 geeignete Versorgungsspannungen und -ströme erzeugt.

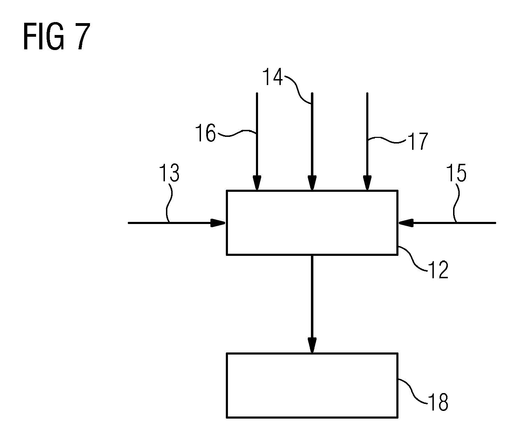

Die Baugruppen 2 bis 8 weisen jeweils hier nicht dargestellte Speicher auf, welche nach einem Einschalten 13 (Figur 7) des Automatisierungsgerätes 1, nach einem Zustandswechsel 14 der jeweiligen Stromversorgungsbaugruppen 2, 3, 4 oder nach einer Änderung 15 der Hardware-Konfiguration des Automatisierungsgerätes 1, im Rahmen dessen eine neue Baugruppe (Quellen- oder Senkenmodul) hinzugefügt oder eine defekte Baugruppe (Quellen- oder Senkenmodul) ausgetauscht wird, von der Auswerteeinheit 12 ausgelesen werden. In den Speichern der Stromversorgungsbaugruppen 2, 3, 4 sind Informationen 16 hinterlegt, mittels deren die Stromversorgungsbaugruppen 2, 3, 4 der Auswerteeinheit 12 anzeigen bzw. melden, wie viel Leistung die jeweilige Stromversorgungsbaugruppe 2, 3, 4 abgeben kann. Mittels der in den Speichern der Baugruppen 5, 6, 7, 8 hinterlegten Informationen 17 wird ferner der Auswerteeinheit 12 der Leistungsbedarf der jeweiligen Baugruppe 5, 6, 7, 8 gemeldet. Die Auswerteeinheit 12 ermittelt aus den Informationen 16 über die Leistungsabgabe der jeweiligen Stromversorgungsbaugruppe 2, 3, 4 eine Gesamt-Leistungsabgabe und aus den Informationen 17 über den Leistungsbedarf der jeweiligen Baugruppen 5, 6, 7, 8 einen Gesamt-Leistungsbedarf. Ferner prüft die Auswerteeinheit 12 aus der Gesamt-Leistungsabgabe und dem Gesamt-Leistungsbedarf, ob das Automatisierungsgerät 1 im aktuellen Betrieb stromversorgungsredundant oder nicht-stromversorgungsredundant betreibbar ist und/oder ob die Gesamt-Leistungsabgabe dem Gesamt-Leistungsbedarf entspricht oder die Gesamt-Leistungsabgabe den Gesamt-Leistungsbedarf unter- oder überschreitet.

Im Folgenden wird lediglich die Prüfung im Hinblick auf eine Stromversorgungsredundanz betrachtet.

Ein Anwender wird auf den stromversorgungsredundanten oder nicht-stromversorgungsredundanten Betrieb hingewiesen, indem die Auswerteeinheit 12 den entsprechenden Betrieb z. B. auf einer LED-Anzeige 18 der CPU-Baugruppe 5 oder auf einer Anzeigeeinheit eines Engineering- oder Bedien- und Beobachtungssystems anzeigt bzw. meldet. Für den Fall, dass ein stromversorgungsredundanter Betrieb gewünscht ist, aber aktuell ein nicht-stromversorgungsredundanter Betrieb angezeigt wird, kann der Anwender umgehend Maßnahmen einleiten und das Automatisierungsgerät 1 z. B. mit mindestens einer weiteren Stromversorgungsbaugruppe versehen oder ggf. eine defekte Stromversorgungsbaugruppe austauschen.

Die Auswerteeinheit 12, welche software- und/oder hardwaremäßig ausgebildet sein kann, braucht nicht Bestandteil der CPU-Baugruppe 5 zu sein, sondern kann auch Bestandteil einer der Stromversorgungsbaugruppen 2, 3, 4 oder einer der Baugruppen 6, 7, 8 sein. Auch kann die Auswerteeinheit 12 redundant ausgeführt sein, z. B. derart, dass jede der Stromversorgungsbaugruppen 2, 3, 4 mit einer Auswerteeinheit versehen ist. In diesem Fall werden jeder Auswerteeinheit zur Ermittlung des Gesamt-Leistungsbedarfs und der Gesamt-Leistungsabgabe die in den Senkenmodulen hinterlegten Informationen über den Leistungsbedarf des jeweiligen Senkenmoduls und die in den Quellenmodulen hinterlegten Informationen über die Leistungsabgabe des jeweiligen Quellenmoduls übermittelt. Jede der Auswerteeinheiten prüft, ob das Automatisierungsgerät stromversorgungsredundant oder nicht-stromversorgungsredundant betrieben werden kann. Falls eine oder zwei der Stromversorgungsbaugruppen 2, 3, 4 ausfallen, kann aufgrund der Auswerteeinheit der noch funktionsfähigen Stromversorgungsbaugruppe die Prüfung weiterhin bewerkstelligt werden.

Selbstverständlich kann der Auswerteeinheit 12 vorgegeben werden, welche Redundanzart zu prüfen ist. Beispielsweise prüft die Auswerteeinheit 12 nach einer Vorgabe des Anwenders, ob das Automatisierungsgerät 1 z. B. gemäß einer 1-aus-2- oder einer 2-aus-3-Stromredundanz betreibbar ist. Mittels eines Engineering-Systems gibt der Anwender die gewünschte Redundanzart vor, welche das Engineering-System über eine hier nicht dargestellte Kommunikationsverbindung der Auswerteeinheit 12 übermittelt. Nach der in der beschriebenen Art und Weise erfolgten Prüfung zeigt die Auswerteeinheit 12 dem Anwender an, ob das Automatisierungsgerät 1 in der vorgegebenen Redundanzart, ob es überhaupt stromversorgungsredundant oder in welcher Redundanzart es betrieben werden kann.

Zur näheren Erläuterung eines Abgleichs der von Quellenmodulen bereitgestellten Leistung mit der von einem Automatisierungsgerät benötigten Leistung, um daraus Schlüsse im Hinblick auf eine Stromversorgungsredundanz ziehen zu können, wird im Folgenden auf die Figuren 2 bis 6 verwiesen. Dort sind in stark vereinfachter Form stromredundante Automatisierungsgeräte dargestellt, wobei der Einfachheit und der besseren Übersichtlichkeit halber lediglich Leistung bzw. Strom abgebende Baugruppen gezeigt sind.

Zwei Stromversorgungsbaugruppen 19, 20 sowie eine Stromversorgungseinheit einer CPU-Baugruppe 21 eines Automatisierungsgerätes 22 (Figur 2) sind parallel geschaltet und zur Versorgung von Baugruppen (Senkenmodule) mit elektrischer Leistung vorgesehen. Dabei wird angenommen, dass die Stromversorgungsbaugruppen 19, 20 jeweils eine Leistung von 25 W und die Stromversorgungseinheit der CPU-Einheit 21 eine Leistung von 15 W bereitstellen und dass die Baugruppen (Senkenmodule) eine Leistung von 40 W benötigen. Falls die Stromversorgungsbaugruppen 19, 20 und die Stromversorgungseinheit der CPU-Baugruppe 21 nicht gestört sind und die angegebenen Leistungen bereitstellen, ist das Automatisierungsgerät 22 stromversorgungsredundant betreibbar, was eine Auswerteeinheit in der beschriebenen Art und Weise erkennt und einem Anwender auf einer Anzeigeeinheit meldet.

Im Rahmen einer derartigen Konfiguration kann eine der Stromversorgungsbaugruppen 19, 20 oder die Stromversorgungseinheit der CPU-Baugruppe 21 ausfallen oder aus dem Automatisierungsgerät 22 gezogen bzw. entfernt werden, das Automatisierungsgerät 22 läuft weiter und ist weiterhin zur Steuerung eines technischen Prozesses betriebsbereit. Die Auswerteeinheit zeigt nun dem Anwender einen nicht-stromversorgungsredundanten Betrieb des Automatisierungsgerätes 22 an.

Figur 3 zeigt ein Automatisierungsgerät 23 mit drei parallel geschalteten Stromversorgungsbaugruppen 24, 25, 26, von denen die Stromversorgungsbaugruppe 24 eine Leistung von 50 W und die Stromversorgungsbaugruppen 25, 26 jeweils eine Leistung von 25 W bereitstellen können. Diese Stromversorgungsbaugruppen 24, 25, 26 sind zur Versorgung von Baugruppen (Senkenmodule) mit einer Leistung von 75 W vorgesehen (im Folgenden als Busleistung bezeichnet), wobei aufgrund der Gesamt-Leistungsabgabe der Stromversorgungsbaugruppen 24, 25, 26 von 100 W und der Busleistung von 75 W eine "eingeschränkte" Stromversorgungsredundanz angezeigt wird; denn für den Fall, dass die Stromversorgungsbaugruppe 24 ausfällt, wird das Automatisierungsgerät 23 nicht mehr ausreichend mit elektrischer Leistung versorgt und ist gestört, fällt dagegen eine der beiden Stromversorgungsbaugruppen 25, 26 aus, läuft das Automatisierungsgerät 23 weiter.

Wäre lediglich eine Busleistung von 50 W erforderlich, so wäre das Automatisierungsgerät stromversorgungsredundant betreibbar. In diesem Fall kann eine dieser drei Stromversorgungsbaugruppen 24, 25, 26 gezogen werden oder ausfallen, das Automatisierungsgerät 23 läuft weiter. Das Automatisierungsgerät 23 läuft in diesem Fall auch dann weiter, wenn die beiden Stromversorgungsbaugruppen 25, 26 gezogen werden oder ausfallen.

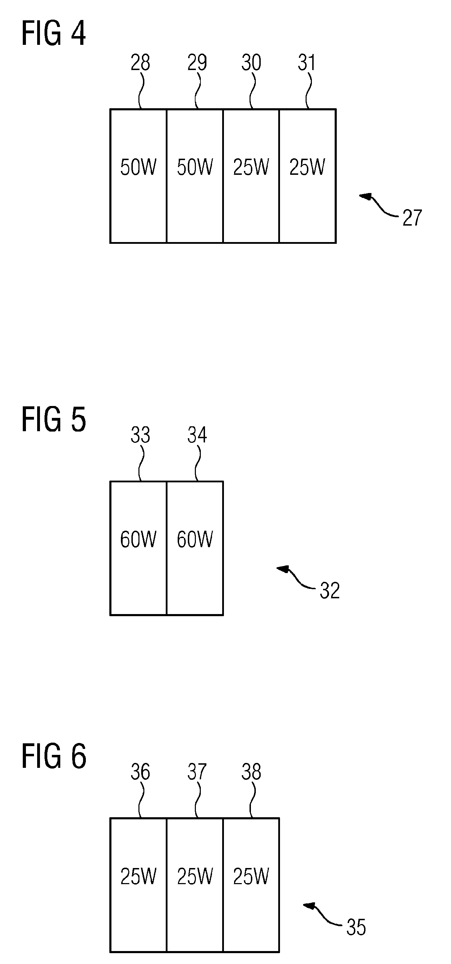

Ein weiteres Automatisierungsgerät 25 (Figur 4) weist vier parallel geschaltete Stromversorgungsbaugruppen 28, 29, 30, 31 auf, von denen die zwei Stromversorgungsbaugruppen 28, 29 jeweils eine Leistung von 50 W und die zwei Stromversorgungsbaugruppen 30, 31 jeweils eine Leistung von 25 W bereitstellen. Falls eine Busleistung von 100 W erforderlich ist, ist das Automatisierungsgerät 27 stromversorgungsredundant betreibbar. Es kann eine beliebige der vier Stromversorgungsbaugruppen 28, 29, 30, 31 oder es können die zwei Stromversorgungsbaugruppen 30, 31 gezogen werden oder ausfallen, in allen Fällen wird das Automatisierungsgerät 27 ausreichend mit elektrischer Leistung versorgt.

In Figur 5 ist ein Automatisierungsgerät 32 mit zwei parallel geschalteten Stromversorgungsbaugruppen 33, 34 dargestellt, welche jeweils eine Leistung von 60 W bereitstellen. Falls für das Automatisierungsgerät 32 eine Busleistung von 60 W erforderlich ist, wird im vorliegenden Beispiel eine 1-aus-2-Redundanz mit entsprechender Verfügbarkeit verwirklicht. Eine der beiden Stromversorgungsbaugruppen 33, 34 kann gezogen werden oder ausfallen, das Automatisierungsgerät 32 ist weiterhin betriebsbereit.

Für den Fall, dass für ein Automatisierungsgerät 35 (Figur 6) eine Busleistung von 50 W benötigt wird, kann mit drei parallel geschalteten Stromversorgungsbaugruppen 36, 37, 38, welche jeweils eine Leistung von 25 W bereitstellen, eine 2-aus-3-Redundanz verwirklicht werden. Eine der drei Stromversorgungsbaugruppen 36, 37, 38 kann ausfallen oder aus dem Automatisierungsgerät 35 entfernt bzw. gezogen werden, das Automatisierungsgerät 35 ist dennoch funktionsfähig und läuft weiter.

Wie beschrieben, erkennen die Automatisierungsgeräte selbstständig, ob aufgrund ihres jeweiligen aktuellen Aufbaus ein redundanter Betrieb im Hinblick auf die Stromversorgung möglich ist. Aufwendige Projektierungsmaßnahmen sind nicht erforderlich. Es können Stromversorgungsmodule eingesetzt werden, deren Leistungs- bzw. Stromabgaben unterschiedlich sein können und die nicht speziell für einen redundanten Einsatz ausgestaltet sind, um eine Stromversorgungsredundanz zu verwirklichen. Darüber hinaus werden unterschiedliche Redundanzarten, beispielsweise eine 1-aus-2- oder eine 2-aus-3-Redundanz, unterstützt.

Ferner kann der Auswerteeinheit 12 vorgegeben werden zu prüfen, um wie viel die Gesamt-Leistungsabgabe den Gesamt-Leistungsbedarf überschreiten soll. Beispielsweise gibt der Anwender mittels eines Engineering-Systems vor, dass die Gesamt-Leistungsabgabe um das 1,5fache über dem Gesamt-Leistungsbedarf liegen soll, was eine Erhöhung des Ausgangsstromes um das 1,5fache bedeutet. In der beschriebenen Art und Weise ermittelt die Auswerteeinheit sowohl den Gesamt-Leistungsbedarf aus den in den Senkenmodulen hinterlegten Informationen über den Leistungsbedarf des jeweiligen Senkenmoduls als auch die Gesamt-Leistungsabgabe aus den in den Quellenmodulen hinterlegten Informationen über die Leistungsabgabe des jeweiligen Quellenmoduls. Schließlich prüft die Auswerteeinheit, ob die Gesamt-Leistungsabgabe dem 1,5fachen des Gesamt-Leistungsbedarfs entspricht, und zeigt das Ergebnis der Prüfung an.

## Patentansprüche

1. Verfahren zum Betreiben eines modularen elektrischen Systems (1), welches eine Vielzahl von Quellen- und Senkenmodulen (2 bis 8) aufweist, wobei mindestens zwei Quellenmodule (2, 3, 4) zur Versorgung der Senkenmodule (5 bis 8) mit elektrischer Leistung vorgesehen und für einen stromversorgungsredundanten Betrieb und/oder zur Erhöhung der verfügbaren Leistung parallel geschaltet sind, wobei einer Auswerteeinheit (12) von dem jeweiligen Quellenmodul (2 bis 4) der Zustand dieses Quellenmoduls (2 bis 4) angezeigt wird, **dadurch gekennzeichnet, dass** von der Auswerteeinheit (12) nach dem Einschalten des Systems, nach einer Zustandsänderung eines der Quellenmodule (2 bis 4) oder nach einer Änderung der Anzahl der Quellen- und/oder Senkenmodule (2 bis 8)
- der Gesamt-Leistungsbedarf aus den in den Senkenmodulen (5 bis 8) hinterlegten Informationen über den Leistungsbedarf des jeweiligen Senkenmoduls (5 bis 8) ermittelt wird,
- die Gesamt-Leistungsabgabe aus den in den Quellenmodulen (2 bis 4) hinterlegten Informationen über die Leistungsabgabe des jeweiligen Quellenmoduls (2 bis 4) ermittelt wird und
- aus dem Gesamt-Leistungsbedarf und der Gesamt-Leistungsabgabe geprüft wird,
- ob das System (1) stromversorgungsredundant oder nicht-stromversorgungsredundant betreibbar ist und/oder
- ob die Gesamt-Leistungsabgabe dem Gesamt-Leistungsbedarf entspricht oder die Gesamt-Leistungsabgabe den Gesamt-Leistungsbedarf unter- oder überschreitet.

2. Verfahren nach Anspruch 1, **dadurch gekennzeichnet, dass** einem Anwender angezeigt wird, ob
- das System (1) stromversorgungsredundant oder nicht-stromversorgungsredundant betreibbar ist und/oder
- die Gesamt-Leistungsabgabe dem Gesamt-Leistungsbedarf entspricht oder die Gesamt-Leistungsabgabe den Gesamt-Leistungsbedarf unter- oder überschreitet.

3. Verfahren nach Anspruch 1 oder 2, **dadurch gekennzeichnet, dass** die Prüfung redundant ausgeführt wird.

4. Verfahren nach einem der Ansprüche 1 bis 3, **dadurch gekennzeichnet, dass** im Hinblick auf eine von einem Anwender vorgegebene Redundanzart und/oder vorgegebene Leistungserhöhung geprüft wird.

5. Modulares elektrisches System, welches eine Vielzahl von Quellen- und Senkenmodulen (2 bis 8) aufweist, wobei mindestens zwei Quellenmodule (2 bis 4)
- zur Versorgung von Senkenmodulen (5 bis 8) mit elektrischer Leistung vorgesehen und für einen stromversorgungsredundanten Betrieb und/oder zur Erhöhung der verfügbaren Leistung parallel geschaltet sind und
- jeweils dazu ausgebildet sind, einer Auswerteeinheit (12) ihren Zustand anzuzeigen,
**dadurch gekennzeichnet, dass** die Auswerteeinheit (12) dazu ausgebildet ist, nach dem Einschalten des Systems (1), nach einer Zustandsänderung eines der Quellenmodule (2 bis 4) oder nach einer Änderung der Anzahl der Quellen- und/oder Senkenmodule (2 bis 8)
- den Gesamt-Leistungsbedarf aus den in den Senkenmodulen (5 bis 8) hinterlegten Informationen über den Leistungsbedarf des jeweiligen Senkenmoduls zu ermitteln,
- die Gesamt-Leistungsabgabe aus den in den Quellenmodulen (2 bis 4) hinterlegten Informationen über die Leistungsabgabe des jeweiligen Quellenmoduls (2 bis 4) zu ermitteln und
- aus dem Gesamt-Leistungsbedarf und der Gesamt-Leistungsabgabe zu prüfen, ob
- das System (1) stromversorgungsredundant oder nicht-stromversorgungsredundant betreibbar ist und/oder
- die Gesamt-Leistungsabgabe dem Gesamt-Leistungsbedarf entspricht oder die Gesamt-Leistungsabgabe den Gesamt-Leistungsbedarf unter- oder überschreitet.

6. Modulares elektrisches System nach Anspruch 5, **dadurch gekennzeichnet, dass** die Auswerteeinheit (12) ferner dazu ausgebildet ist, einem Anwender anzuzeigen, ob
- das System (1) stromversorgungsredundant oder nicht-stromversorgungsredundant betreibbar ist und/oder
- die Gesamt-Leistungsabgabe dem Gesamt-Leistungsbedarf entspricht oder die Gesamt-Leistungsabgabe den Gesamt-Leistungsbedarf unter- oder überschreitet.

7. Modulares elektrisches System nach Anspruch 5 oder 6, **dadurch gekennzeichnet, dass** die Auswerteeinheit (12) Bestandteil mindestens eines der Quellen- oder Senkenmodule (2 bis 8) ist.

8. Modulares elektrisches System nach einem der Ansprüche 5 bis 7, **dadurch gekennzeichnet, dass** die Auswerteeinheit (12) redundant ausgeführt ist.

9. Modulares elektrisches System nach einem der Ansprüche 5 bis 8, **dadurch gekennzeichnet, dass** die Auswerteeinheit (12) dazu ausgebildet ist, im Hinblick auf eine von einem Anwender vorgegebene Redundanzart und/oder vorgegebene Leistungserhöhung zu prüfen.

10. Auswerteeinheit für ein modulares elektrisches System nach einem der Ansprüche 5 bis 9, welches eine Vielzahl von Quellen- und Senkenmodulen (2 bis 8) aufweist, wobei mindestens zwei Quellenmodule (2 bis 4)
- zur Versorgung von Senkenmodulen (5 bis 8) mit elektrischer Leistung vorgesehen und für einen stromversorgungsredundanten Betrieb und/oder zur Erhöhung der verfügbaren Leistung parallel geschaltet sind und
- jeweils dazu ausgebildet sind, der Auswerteeinheit (12) ihren Zustand anzuzeigen,
**dadurch gekennzeichnet, dass** die Auswerteeinheit (12) dazu ausgebildet ist, nach dem Einschalten des Systems (1), nach einer Zustandsänderung eines der Quellenmodule (2 bis 4) oder nach einer Änderung der Anzahl der Quellen- und/oder Senkenmodule (2 bis 8)
- den Gesamt-Leistungsbedarf aus den in den Senkenmodulen (5 bis 8) hinterlegten Informationen über den Leistungsbedarf des jeweiligen Senkenmoduls zu ermitteln,
- die Gesamt-Leistungsabgabe aus den in den Quellenmodulen (2 bis 4) hinterlegten Informationen über die Leistungsabgabe des jeweiligen Quellenmoduls (2 bis 4) zu ermitteln und
- aus dem Gesamt-Leistungsbedarf und der Gesamt-Leistungsabgabe zu prüfen, ob
- das System (1) stromversorgungsredundant oder nicht-stromversorgungsredundant betreibbar ist und/oder
- die Gesamt-Leistungsabgabe dem Gesamt-Leistungsbedarf entspricht oder die Gesamt-Leistungsabgabe den Gesamt-Leistungsbedarf unter- oder überschreitet.

11. Auswerteeinheit nach Anspruch 10, **dadurch gekennzeichnet, dass** die Auswerteeinheit (12) ferner dazu ausgebildet ist, einem Anwender anzuzeigen, ob
- das System (1) stromversorgungsredundant oder nicht-stromversorgungsredundant betreibbar ist und/oder
- die Gesamt-Leistungsabgabe dem Gesamt-Leistungsbedarf entspricht oder die Gesamt-Leistungsabgabe den Gesamt-Leistungsbedarf unter- oder überschreitet.

12. Auswerteeinheit nach Anspruch 10 oder 11, **dadurch gekennzeichnet, dass** die Auswerteeinheit (12) Bestandteil mindestens eines der Quellen- oder Senkenmodule (2 bis 8) ist.

13. Auswerteeinheit nach einem der Ansprüche 10 bis 12, **dadurch gekennzeichnet, dass** die Auswerteeinheit (12) redundant ausgeführt ist.

14. Auswerteeinheit nach einem der Ansprüche 10 bis 13, **dadurch gekennzeichnet, dass** die Auswerteeinheit (12) dazu ausgebildet ist, im Hinblick auf eine von einem Anwender vorgegebene Redundanzart und/oder vorgegebene Leistungserhöhung zu prüfen.
